# EUROPEAN PATENT APPLICATION

(11) **EP 1 006 078 A1**
(43) Date of publication of application: **07.06.2000**
(21) Application number: 98919576.3
(22) Date of filing: 13.05.1998
(51) Int. Cl.: C01B 3/02, C01G 29/00

(54) **METHOD AND APPARATUS FOR GENERATING HYDROGEN GAS BY DIRECT THERMAL DECOMPOSITION OF WATER**

(30) Priority: 13.05.1997 JP 12206697
(71) Applicant: Sugie, Yosohiro, Hyogo 675-0022 (JP); Sasaki, Manabu, Miyagi 984-0065 (JP); Kimura, Kenzo, Hyogo 671-0224 (JP)
(72) Inventor: Sugie, Yosohiro, Hyogo 675-0022 (JP); Sasaki, Manabu, Miyagi 984-0065 (JP); Kimura, Kenzo, Hyogo 671-0224 (JP)
(74) Representative: Matthews, Derek Peter
(86) International application number: JP9802105
(87) International publication number: WO9851612

(57) **Abstract**

Water vapor, which is generated by heating (to 80°C) pure water within a steam generating apparatus 1, is supplied into a reactor 7 from a lower portion thereof through a mass-flow meter 6. In this reactor 7 is filled zeolite, being a compound oxide of a silica-alumina group. Around the reactor 7 is positioned a heater 9, and to an upper end of the reactor is connected a conduit 10, on which are provided a bypass 11, a N₂ trap and a suction pump 14.

## Description

### BACKGROUND OF THE INVENTION

### FIELD OF THE INVENTION

The present invention relates to a method for generating hydrogen gas by means of thermal decomposition or cracking of water as a directly treated ingredient, and, specifically, employing only one reaction therefor.

### DESCRIPTION OF PRIOR ART

Hydrogen is expected to be in much larger demand in the future as a source of clean energy, as it produces only water when it is combusted. For the industrial utilization of hydrogen, reliable and consistent means of production of hydrogen must be obtained.

As methods for the continuous production of hydrogen gas, conventionally were studied (1) a method for obtaining it by means of electrolysis of water and (2) a method for obtaining it by means of a thermochemical cycle.

From a view point of cost, however, it is impossible to apply an electrolysis method as mentioned above industrially in a country where the electricity cost or power rate is high, such as in Japan.

Also with the method operating by means of the thermochemical cycle, though various kinds of methods were proposed or practiced for by this means, as will be mentioned below, these methods still however have their respective problems.

### [Steam Reforming Method]

According to this method, methane (or marsh) gas is reacted with steam (i.e., water vapor) which is heated to 700°C to 800°C.

With this method, however, there are problems in that the reacting temperature thereof is high and it is accompanied by discharge of carbon dioxide, which causes anathermal or temperature-elevating climatic effects (i.e., the greenhouse effect) on the natural environment, and further that it necessitates the use of a large-sized facility.

### [Conversion Reaction of Carbon Monoxide]

CO+H₂O=CO₂+H₂

The conversion reaction mentioned above is conducted by using a catalyst, such as iron oxide (Fe₃O₄) or a material being of a zinc oxide-copper group. Also, a report by M. Laniecki, et al., describes the method in which NaY- type zeolite is used as the catalyst.

The conversion reaction using the conversion reaction of carbon monoxide, however has drawbacks in that the reacting temperature thereof is, like the electrolysis method, high, and in that it also is accompanied by discharge of carbon dioxide, similar to the above.

### [Direct Decomposition of Water By Means of Triferrous Tetroxide]

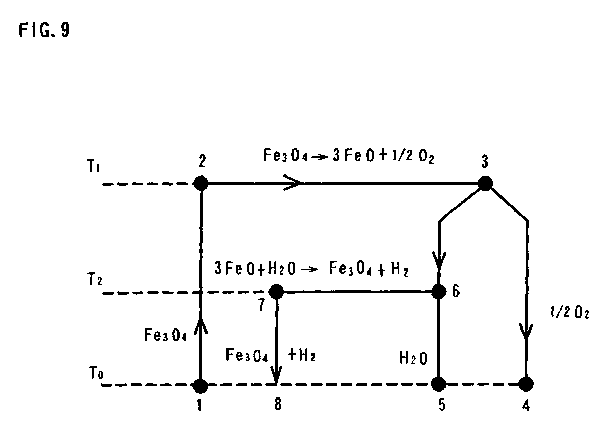

This is a method which was tried by NEDO wherein, as shown in Fig. 9, the method comprises eight processes of an iron-steam type. The method has drawbacks in that the temperature associated with producing FeO from Fe₃O₄ by deoxidizing thereof is high, and that the apparatus for combining the reactions in a large number of stages is complex.

### [Cycle of Halogen Group]

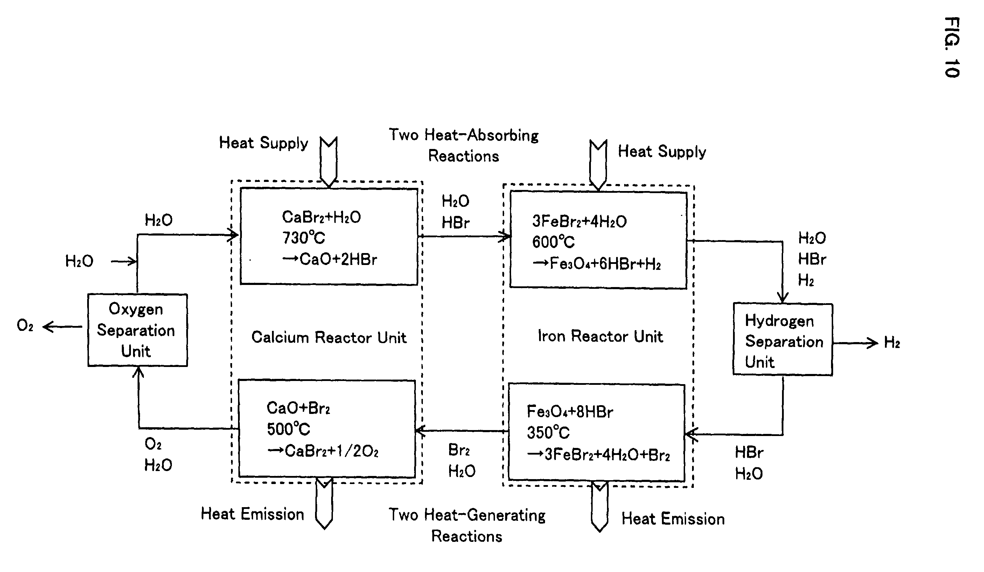

Fig. 10 shows a cycle for producing hydrogen gas, called UT-3 by Tokyo University, and it comprises the following reactions in a large number of stages:

CaBr₂+H₂O=CaO+2HBr (700-750°C)

CaO+1/2Br₂=CaBr+1/2O₂ (500-600°C)

Fe₃O₄+8HBr=3FeBr₂+4H₂O+Br₂ (200-300°C)

3FeBr₂+4H₂O=Fe₃O₄+6HBr+H₂ (500-650°C)

This method also has drawbacks in that the reacting temperature is high, and the apparatus for combining the reactions in a large number of stages is complex.

### [Iron-Bromine Cycle]

The following equations show the cycle for generating hydrogen gas as conducted by Osaka Kogyo Research Laboratory.

3FeBr₂+4H₂O=Fe₃O₄+6HBr+H₂ (650°C)

Fe₃O₄+8HBr=FeBr₄+4H₂O+Br₂ (to 200°C)

SO₂+Br₂+2H₂O=H₂SO₄+2HBr (to 80°C)

H₂SO₄=H₂O+SO₂+1/2O₂ (800°C)

This method also has drawbacks in that the reacting temperature is high, and the apparatus for combining the reactions in a large number of stages is complex.

### [Oxide Cycle]

The following is the cycle for producing oxygen gas, which was conducted by Los Alamos Research Laboratory, and of which was published a report teaching that the reaction proceeds up to 40 cycles, illustrated by the following equations:

(SrO)yUO(3-x)+(3-y)Sr(OH)₂ =Sr₃UO₆+(3-y-x)H₂O+xH₂ (550°C)

Sr₃UO₆+(3-y)H₂O=(SrO)yUO₃+(3-y)Sr(OH)₂ (90°C)

(SrO)yUO₃=(SrO)yUO(3-x)+x/2O₂ (600°C)

This method however, since it uses oxide compounds of strontium and uranium, has a disadvantage due to a resource scarcity, and also due to a possibility of causing environmental contamination with these materials.

### [Cycle of Surfer Group]

This refers to the cycle for producing hydrogen gas by combining the following reactions in a large number of stages thereof, however it is not clear that the experiment thereof was actually advanced or not:

H₂O+Cl₂=2HCl+1/O₂ (800°C)

2HCl+S+FeCl₂=H₂S+2FeCl₃ (100°C)

H₂S=H₂+1/2S₂ (800°C)

2FeCl₃=2FeCl₂+Cl₂

### DISCLOSURE OF THE INVENTION

As is mentioned in the above, each of the technologies for producing hydrogen gas according to the conventional arts, excluding the electrolysis method, is typified by high reacting temperatures and combination of the reactions in a large number of stages, therefore the apparatus for it comes to be complex and large-scaled, and further the outputs of these methods are accompanied by reaction products such as CO₂, etc.

Accordingly, the present invention is created for the purpose of providing a method for generating hydrogen gas and an apparatus therefor, being low in cost and high in efficiency, and having no accompanying reaction product such as CO₂, etc.

Namely, in the method for generating hydrogen gas according to the present invention, the steam (water vapor) or water is contacted with a compound oxide of the silica-alumina group, such as zeolite, etc., at a temperature equal to or higher than 300°C and equal to or lower than 600°C, to divide or separate hydrogen thereby from molecules of water vapor or water molecules.

The mechanism for separating hydrogen from molecules of water vapor or water molecules can be considered to have the function of a solid acid, i.e., the catalytic function of the compound oxide of silica-alumina group, and it will be inferred by taking an example of zeolite, below.

### [Solid Catalytic Function of Zeolite]

Heat treatment of NH₄Y type zeolite, for example, causes it to become HY type zeolite at a temperature of 250-300°C, as shown by the chemical equation below, and it exhibits the property of solid acid when continuously heated further.

Through dissociation and recombination of protons bonding on the Si-O (i.e., point of Lewis acid) of the solid acid, hydrogen gas (H₂) is generated.

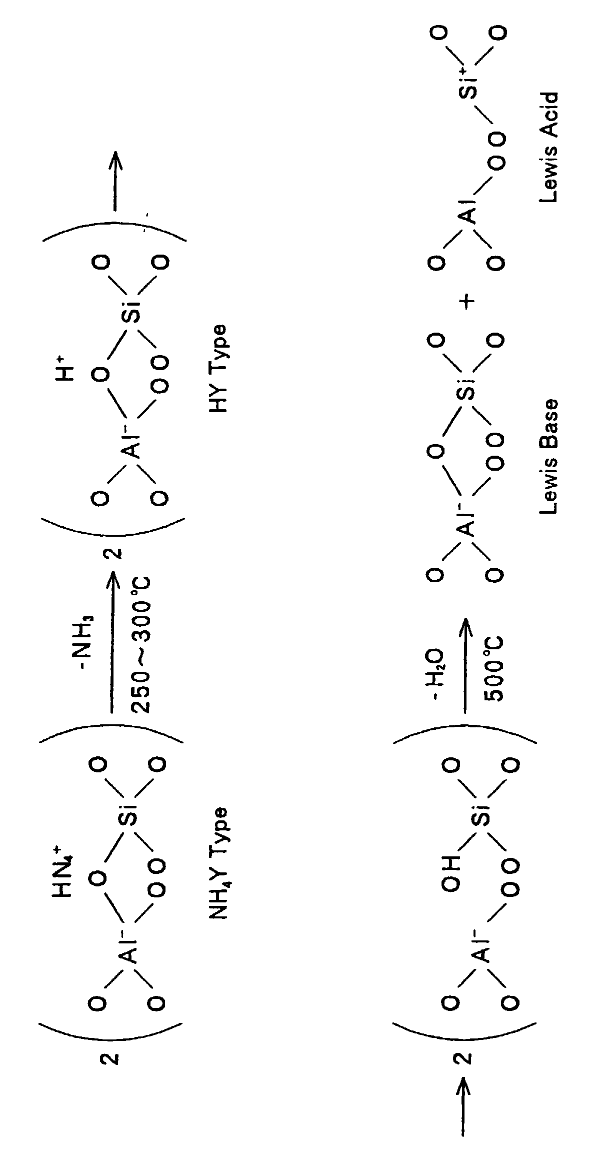

Other than the catalytic function mentioned above, it may be considered that a reaction due to an electrostatic field, a reaction involving metal halogenide or a deoxidization of metal oxide may participate in a complex manner, and this aspect will be addressed below.

### [Function due to Static Electric Field]

In NaY type zeolite or NaX type zeolite (the NaY type has a ratio of SiO₂ being larger than that of the NaX type), Na⁺ exists necessarily in the vicinity of (AlO₄)⁻ group in the crystal structure thereof. Exchanging this Na⁺ (cation of mono(1)-valence) with a cation of di(2)-valence or tri(3)-valence, shielding by the cation in the electrostatic field from the (AlO₄)⁻ group becomes small, therefore a strong electrostatic field is generated in the vicinity of the cation or the (AlO₄)⁻ group.

The strength of the electrostatic field at a distance 3 Å from the cation of di(2)-valence exceeds 1V/Å. It can be considered that admolecule (H₂O) is polarized due to the function of this strong electrostatic field, thereby readily leading to the reaction (H₂O=H⁺+OH⁻).

This way of thinking or concept coincides with the facts that the NaY type zeolite, having more (AlO₄)⁻ groups, is higher in activity than that of the NaX type, that the cation of di(2)-valence is higher in activity than that of the cation of mono(1)-valence, and that the size of the ion radius has an inverse relation to the magnitude of the activity.

Further, in relation to the above, by exposing the molecules of water vapor to an atmosphere of plasma, for example a low temperature plasma which can be generated in the vicinity of room temperature and at ambient pressure, or by placing them in an atmosphere in which an electrostatic field is formed, the admolecule is excited and therefore it can be considered that the division or separation of hydrogen (H⁺) is promoted or accelerated thereby.

### [Reaction Upon Metal Halogenide]

Within the porous structure of zeolite is absorbed metal halogenide of high activity. This metal halogenide (i.e., FeBr₂, etc.) causes an oxidization-reduction reaction with water, thereby generating hydrogen gas (H₂).

### [Deoxidization from Zeolite]

Zeolite is a compound oxide of the silica-alumina group. When the zeolite is heated in a reducing atmosphere, the deoxidization occurs. When being heated in the air, the visible color of the zeolite is orange, while it shows a color of dark-gray when being reduced in an H₂ atmosphere. It is inferred that the reason for the dark-gray color is that omission or lack of oxygen atoms causes change in the crystal structure.

When this zeolite having the dark-gray color (i.e., deoxidized zeolite) is brought into contact with molecules of water vapor, the oxygen atoms of the water vapor molecules bond at the positions where the oxygen is omitted, and as a result of this hydrogen gas (H₂) is generated.

Deoxidization of the zeolite occurs with continuity when the heating is continued, thereby generating the hydrogen continuously, provided that the water vapor molecules are supplied or available thereto.

Further, in the experiment using the orange-colored zeolite, while the generation of hydrogen gas (H₂) cannot be recognized initially, the hydrogen generation comes to be remarkable once the color of the zeolite turns to the dark-gray color.

There still lies a possibility that the mechanisms of generating hydrogen gas as mentioned above, by means of direct thermal decomposition or cracking of water according to the present invention, are in a tangle or are of a complexity differing in some way from the hypothesis, however they are considered and expected to be clearer in due course.

Further, as an apparatus for obtaining hydrogen gas through the direct thermal decomposition or cracking of water as mentioned above, it is necessary to employ a steam generating means for generating steam or water vapor from water, a steam supplying means for sending the steam generated by the steam generating means, a compound oxide of the silica-alumina group, such as zeolite, being filled within a reactor, and a gas removal means for drawing out the oxygen gas generated within the reactor to an outside thereof.

Also, as another type of apparatus for obtaining hydrogen gas through the direct thermal decomposition or cracking of water as mentioned above, it is necessary to employ a water supplying means for sending water directly into a reactor, a compound oxide of the silica-alumina group, such as zeolite, being filled within the reactor, and a gas removal means for drawing out the oxygen gas generated within the reactor to the outside thereof.

As variations of the reactor, there can be considered a vertical type and a horizontal type. In the case of the vertical type reactor, it is effective that the steam supplying means is connected to the lower portion of the reactor, while the gas removal means is connected to the upper portion thereof, and the water may be supplied directly from anywhere. In the case of the horizontal reactor, it is effective that the steam supplying means or the water supplying means is provided by a pipe inserted into the reactor from one side thereof, while the gas removal means is connected to the other (opposite) side of the reactor.

Further, for effectively generating hydrogen gas, it is preferable to provide stirring means, so as to increase the chance of contact between the water vapor molecule or water molecule and zeolite (silica-alumina compound oxide).

As the stirring means which can be applied to the vertical type reactor a stirring fin or vane can be considered, for example, while as that which can be applied to the horizontal type reactor, there can be considered a rotating mechanism for causing the reactor to rotate around a horizontal axis thereof.

Further, for promoting separation of hydrogen atoms from the water vapor molecules or water molecules, it can be considered effective to cause the water vapor molecules or water molecules to be in an excited condition by using the influence thereupon of an electric field, and for that purpose it is possible to cause the inside of the reactor to be within or to contain an electric field, by means of connecting the reactor to an appropriate electric power source of high frequency.

### BRIEF DESCRIPTION OF THE DRAWINGS

Fig. 1 is a view showing an example of an apparatus for practicing a method for generating hydrogen gas according to the present invention;
Fig. 2 is a view showing another example of an apparatus for practicing the method for generating hydrogen gas according to the present invention;
Fig. 3 is a flow chart showing the steps of experiments described herein;
Fig. 4 is a graph showing relationships between H₂ concentration (and CH₄ concentration) and the number of consecutive reactions;
Fig. 5 is a graph showing a relationship between the volume (ml) of H₂ produced and the number of reactions;
Fig. 6 is a graph showing a relationship between an area of CH₄ measured by gas chromatography and the number of consecutive reactions;
Fig. 7 is a graph showing a relationship between an area of H₂ measured by gas chromatography and the number of consecutive reactions;
Fig. 8 is a graph showing a relationship between the number of consecutive reactions and H₂/CH₄ and H₂ produced;
Fig. 9 is a view showing a conventional thermochemical cycle for continuous production of hydrogen gas; and
Fig. 10 is a view further showing a conventional thermochemical cycle for continuous production of hydrogen gas, wherein reference numeral 1 indicates a steam generating apparatus, 3 and 10 indicate conduits, 5 indicates a pre-heater, 6 indicates a mass-flow, 7 and 22 indicate a reactor, 8 indicates zeolite, 9 and 31 indicate heaters, 11 indicates a bypass, 13 indicates a N₂ trap, 14 indicates a suction pump, and 21 indicates a heat insulator case.

### BEST MODE FOR CARRYING OUT THE INVENTION

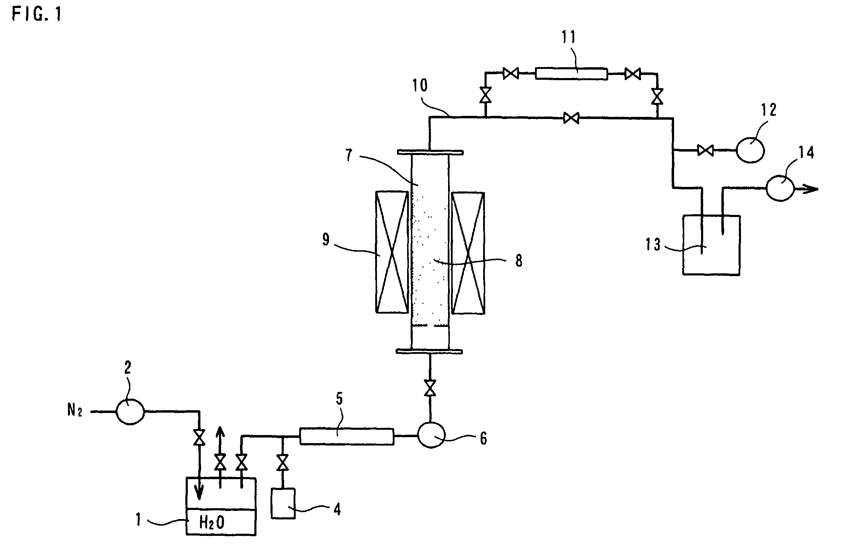

Hereinafter, embodiments according to the present invention will be fully explained with reference to the attached drawings. Fig. 1 is a view showing an example of an apparatus for practicing the method for generating hydrogen gas according to the present invention, wherein a reference numeral 1 indicates a steam generating apparatus, into which is supplied N₂ gas as a carrier gas through a flow meter 2.

To the steam generating apparatus 1 is connected a conduit or pipe 3 for leading out the generated steam or water vapor together with the carrier gas, on a passage of which are provided a separator 4, a pre-heater 5 and a mass-flow controller 6, and an end of the conduit 3 is connected to a bottom portion of a column-like reactor 7 of a vertical type.

Within the reactor 7 is filled zeolite 8, as compound oxide of silica-alumina group, and around the reactor 7 is provided a heater 9. Further, at an upper end of the reactor 7 is connected a conduit 10 to which are provided a bypass 11 for sampling, a pressure meter 12 and a N₂ trap 13 to which a suction pump 14 is connected.

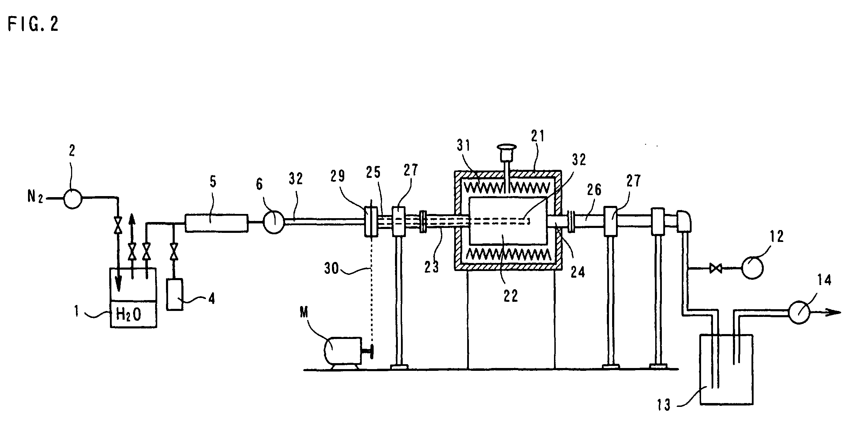

Fig. 2 is a view showing another example of the apparatus, wherein the elements being common with those of the apparatus shown in Fig. 1 are assigned the same reference numerals thereto and the explanation thereof is omitted.

In this apparatus, within a heat insulating case 21 which can be freely opened or closed, a reactor 22 made of metal in a cylindrical shape is positioned in a horizontal direction. To an inlet portion 23 of the reactor 22 is connected a duct body 25, while to an outlet portion 24 thereof is connected a duct body 26, and thereby the reactor 22 is rotatably supported by duct bodies 25 and 26 through bearings 27... .

Also, on a floor is provided a motor M, and a chain 30 is provided connecting a driving sprocket 28 of the motor M and a sprocket 29 to be driven via the chain 30, sprocket 29 being provided on the duct body 25 mentioned above, and thereby the reactor 22 is rotated by driving the motor M. Further, within the heat insulating case 21 is provided a heater 31 for heating the reactor 22.

Within the duct body 25 mentioned above is held a metallic pipe 32 for supplying steam through an isolator or insulator of material such as Teflon, ceramic, etc., and to the pipe 32 is supplied the steam or water vapor being heated, through the mass-flow controller 6. And, a tip portion of the pipe 32 is positioned to be confronted inside the reactor 22, and is formed with slits for spouting or emitting the steam therethrough.

Here, the reactor 22 mentioned above is grounded (to the Earth), while the metallic pipe 32 is (electrically) insulated or isolated from the reactor 22, therefore each of them can function independently as electrodes for forming an electric field therebetween. In this connection, the reactor 22 functions as a cathode, while the metallic pipe 32 functions as an anode.

Also onto the duct body 26 are provided, similarly to the apparatus shown in Fig. 1, a pressure meter 12 and a N₂ trap 13 to which a suction pump 14 is connected.

The apparatus illustrated in the above has such a structure that the water is introduced into the reactor under the condition of being changed or converted into steam or water vapor, however other structures in which the water is introduced directly are also applicable.

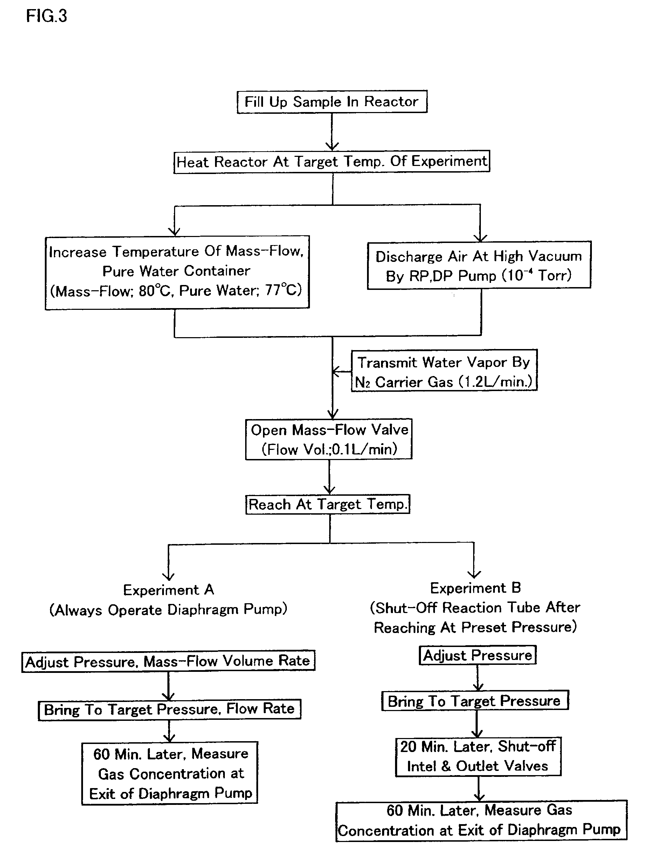

Next, experiments A and B shall be described. Experiments A and B are conducted using the apparatus shown in the Fig. 1, in accordance with the flow shown in Fig. 3. Further, three (3) kinds of natural zeolites are utilized in those experiments. Results of analysis on the compositions are shown in the following table (TABLE 1).

**TABLE 1**

| Name of Constituent | Sample 1 No heat treatment | Sample 2 After heat treatment | Sample 3 After heat treatment |
|---|---|---|---|
| SiO₂ | 65.6 | 65.3 | 67.9 |
| Al₂O₃ | 17.8 | 18.1 | 16.5 |
| CaO | 4.35 | 4.21 | 4.63 |
| Fe₂O₃ | 4.15 | 3.87 | 3.48 |
| K₂O | 2.74 | 2.56 | 2.36 |
| Na₂O | 2.13 | 1.95 | 2.13 |
| MgO | 1.68 | 1.38 | 1.16 |
| SO₃ | 0.694 | 1.73 | 1.55 |
| TiO₂ | 0.500 | 0.479 | - |
| MnO | 0.108 | 0.101 | 0.114 |
| P₂O₅ | 0.067 | 0.0427 | 0.0736 |
| BaO | 0.0638 | - | - |
| SrO | 0.0220 | 0.0171 | 0.0142 |
| ZrO₂ | 0.0197 | 0.0161 | - |
| V₂O₅ | 0.0128 | - | - |
| Rb₂O | Trace | - | - |
| ZnO | Trace | - | - |
| Y₂O₃ | Trace | - | - |
| Cl | Trace | - | - |
| NiC | Trace | - | - |
| As₂O₃ | Trace | 0.0128 | - |
| Ga₂O₃ | Trace | - | - |
| Br | - | 0.109 | 0.0464 |
| MnO | - | 0.101 | 0.114 |
| SnO₂ | - | 0.0585 | 0.0585 |

The following table (TABLE 2) shows the results of experiment A, and from the information shown in this table it is apparent that the generation of hydrogen gas can scarcely be acknowledged at 300°C, however the generation of H₂S can be acknowledged at 400°C, 500°C and 600°C, respectively.

Some of the measured values (pointers) are negative values. This phenomenon owes to the fact that the H₂ concentration meter analyzes H₂ concentration by measuring the thermal conductivity of the gas, and therefore the measured value swings in the negative direction when there is H₂S detected.

**TABLE 2**

| (Volume% of Generated Hydrogen) | | | | |
|---|---|---|---|---|
| Flow volume of Steam (L/min) | Temperature (°C) | | | |
| | 300 | 400 | 500 | 600 |
| 0.05 | -0.3 | Very Small Volume | | 0.2-0.3 |
| 0.1 | -0.2 | 0.05-0.1 | Pointer in Negative Direction | |
| 0.2 | -0.2 | Pointer in Negative Direction | Pointer in Negative Direction | |
| 0.3 | -0.2 | | | 0.6 |
| Remarks | No Smell | Smell of H₂S. Pointer in Negative Direction. Sample is re-used which was used at 300°C. | Strong Smell of H₂S. Pointer in Negative Direction. Sample is re-used which was used at 300°C and 400°C. | |
| Experiment Condition: the mass-flow volume is constant; the reactor pressure constant from 360 to 380 Torr; mass-flow temperature at 80°C; pure water temperature at 78°C; and values are measured by the H₂ concentration meter. | | | | |

The following tables (TABLE 3 to TABLE 6) show the results of experiment B, wherein the generation of hydrogen cannot be acknowledged at the reacting temperature 300°C, however it can be acknowledged at the temperatures 400°C, 500°C and 600°C, respectively. In particular, at the temperatures 400°C and 500°C, the difference between the pressures at the start and at the end thereof is large. Since this difference can be considered to be an increase in the pressure due to the separation of the water vapor into oxygen and hydrogen, it therefore can be considered that a larger amount of hydrogen is generated than is indicated by the measured value generated by the concentration meter.

**TABLE 3**

| Start Pressure (Torr) | End Pressure (Torr) | Hydrogen Concentration (%) | Oxygen Concentration (%) | Smell |
|---|---|---|---|---|
| 600 | 681 | -0.4 | | No |
| 560 | 567 | -0.4 | 3 | No |
| 460 | 462 | -0.3 | 1.5 | No |
| 360 | 362 | -0.3?-0.2 | 1.5 | No |
| 260 | 259 | -0.2 | 1.5 | No |
| 160 | 160 | Very Small Change | | No |
| Remarks | | | Inaccurate oxygen concentration | |
| Experiment condition: reacting temperature is 300°C, and the reaction time is 60 minutes. | | | | |

**TABLE 4**

| Start Pressure (Torr) | End Pressure (Torr) | Hydrogen Concentration (%) | Oxygen Concentration (%) | Smell |
|---|---|---|---|---|
| 660 | 697 | a. -0.3 | | A little |
| | | b. 1.5 | | |
| 560 | 563 | a. -0.3 | 3 | No |
| | | b. 1.5 | | |
| 460 | 461 | a. -0.2 | 1.5 | No |
| 360 | 359 | a.-0.05?-0.1 | 1.5 | No |
| 260 | | | 1.5 | No |
| 160 | | | | No |
| Remarks | | a. measured by H₂ concentration meter. | concentration data is inaccurate | |
| | | b. measured by concentration meter of detector tube type. | | |
| Experiment condition: the reacting temperature is 400°C, and the reaction time is 60 minutes. | | | | |

**TABLE 5**

| Start Pressure (Torr) | End Pressure (Torr) | Hydrogen Concentration (%) | Oxygen Concentration (%) | Smell |
|---|---|---|---|---|
| 660 | 672 | a. -0.3 | 0.8 | Smell of H₂S |
| | | b. 1.5 | | |
| 560 | 560 | a. -0.4 | 1.4 | Smell of H₂S |
| | | b. 1.5 | | |
| 460 | | | | |
| Remarks | | a. measured by H₂ concentration meter. | concentration data is inaccurate. | |
| | | b. measured by concentration meter of detector tube type. | | |
| Experiment condition: the reacting temperature is 500°C, and the reaction time is 60 minutes. | | | | |

**TABLE 6**

| Start Pressure (Torr) | End Pressure (Torr) | Hydrogen Concentration (%) | Oxygen Concentration (%) | Smell |
|---|---|---|---|---|
| 660 | | | | |
| 560 | | | | |
| 460 | 465 | a. 1.2 | 1.5 | Smell of H₂S |
| 360 | 365 | a. 0.9 | 1.5 | Smell of H₂S |
| 260 | 267 | a. 1.3 | 1.5 | Smell of H₂S |
| 160 | 177 | a. 0.9 | | Smell of H₂S |
| Remarks | | a. measured by H₂ concentration meter. | concentration data is inaccurate. | |
| | | b. measured by concentration meter of detector tube type. | | |
| Experiment condition: the reacting temperature is 600°C, and the reaction time is 60 minutes. | | | | |

From the experimental results shown in TABLE 1 through TABLE 6, it becomes apparent that the hydrogen is generated even at the reacting temperature being equal or less than 600°C, and that the higher the start pressure, the larger the volume of hydrogen being generated.

Next, the volume of the hydrogen gas is measured while fixing the reacting temperature at 500°C or 600°C and as well while changing the reaction time, respectively.

In more detail, a sample is filled into the reactor, and then it is treated by heating under vacuum when the pressure reaches a predetermined vacuum pressure after the beginning of the reduction of pressure. Thereafter, while closing a valve at the outlet side of the reactor, a valve at the inlet side thereof is opened to introduce an N₂ gas mixture (the carrier gas) and the steam or water vapor into the reactor, thereby conducting the reaction. The result of this is shown in TABLE 7 through TABLE 9, below.

Further, in TABLE 7 through TABLE 9, the pelletized sample is a particle of the above-mentioned natural zeolite, produced in Itaya, being formed in several mm diameter particles after crushing thereof.

**TABLE 7**

| Sample | Sample Volume(mL) | Reacting Temp. (°C) | Initial Pressure (Torr) | Reaction Time (min) | Number of Reactions | Measured Result (V%) | | | Remarks |
|---|---|---|---|---|---|---|---|---|---|
| | | | | | | H₂ | O₂ | CH₄ | |
| Pelletized Sample | 450 | 600 | Room Pressure | 30 | 2 | (1)>0.5 | | | |
| | | | | | | (2)>2 | | | |
| Pelletized Sample | 400 | 550 | Room Pressure | 120 | 1 | (1)0.3 | | | |
| Pelletized Sample | 400 | 600 | Room Pressure | 120 | 1 | (1)0.1 | | | measured after sampling 3 samples |
| ZSM5 | | 600 | 58 | 100 | 1 | (1)0.2 | | | |
| | | | | | | (2)>1.5 | | | |
| Pelletized Sample | 400 | 600 | Room Pressure | 120 | 1 | (1)0.3 | | | measured after sampling one sample |
| | 400 | 600 | 658 | 30 | 2 | (1)0.2 | | | |
| ACT (ZPOL) | 450 | 600 | 50 | 100 | 1 | (1)0.02 | | | |
| | | | | | | (2)1.5? | | | |
| Pelletized Sample | 450 | 600 | Room Pressure | 180 | 1 | (1)1.1 | | | |
| | | | | | | (2)>>2 | | | |
| Pelletized Sample | 200 | 600 | Room Pressure | 60 | 2 | (1)0.15? | | yes | 1^{st} reaction: 6min |
| | | | | | | (3)0.14 | | | |
| Market Variety Sample | 200 | 600 | Room Pressure | 120 | 1 | (1)0.1? | | | measured after sampling one sample |
| | | | | | | (2)>>2 | | | |
| Experimental process: fill sample _ reduce pressure _ bring to a predetermined vacuum _ heat treat under vacuum _ shut-off valve _ introduce gas mixture _ reaction _ measurement. | | | | | | | | | |

| | | | | | | | | | |
|---|---|---|---|---|---|---|---|---|---|
| • Modes of measuring methods are as below: (1):Hydrogen gas meter, | | | | | | | | | |
| (2) Gas detector tube, and | | | | | | | | | |
| (3) Gas chromatography. | | | | | | | | | |

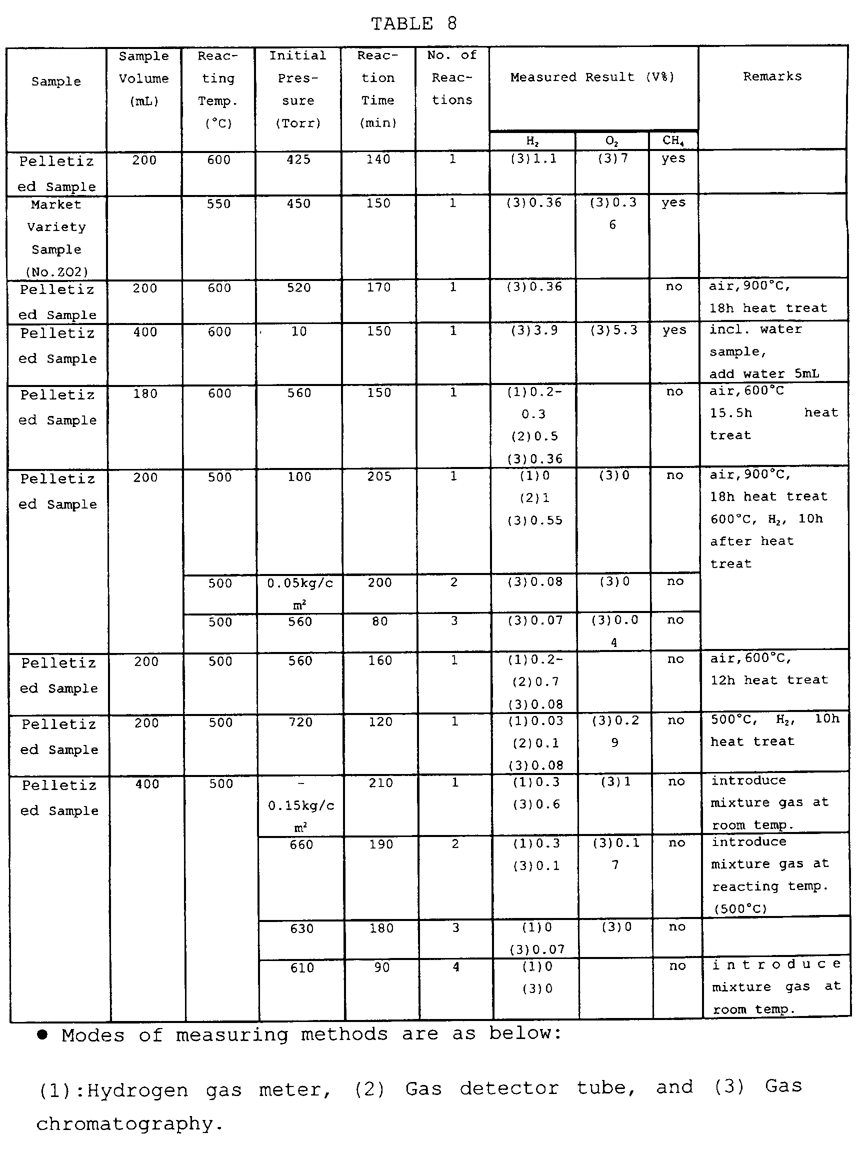

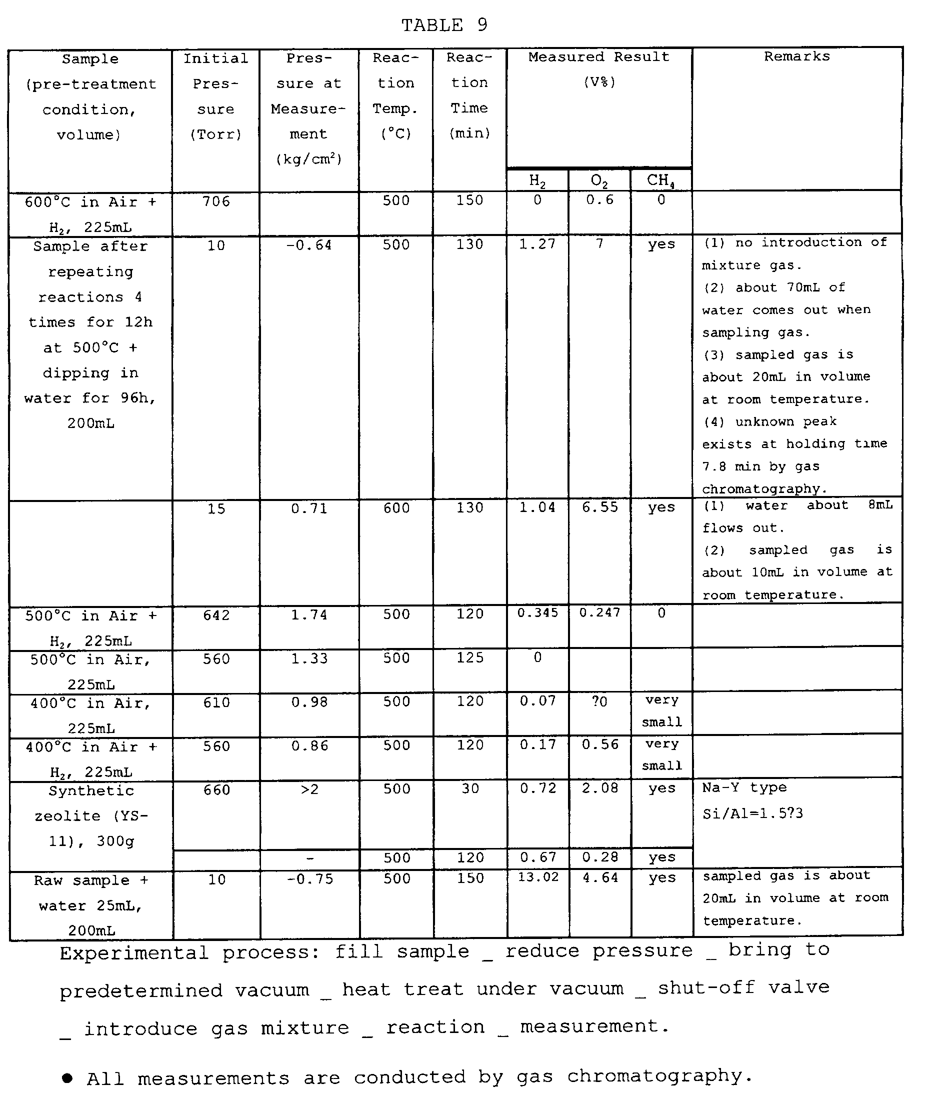

Based the results shown in TABLE 7, the hydrogen gas is confirmed to be equal to or greater than 2% in the concentration when the start pressure is set at the room pressure.

Also, from the results shown in TABLE 8 and TABLE 9, even when the start pressure is set to be low, the hydrogen at extremely high concentration (i.e., 3.9% and 13.2%) is confirmed in the case where the water is contained in the sample in advance.

The reason for obtaining hydrogen at the high concentration compared to that obtained by the other experiment(s), can be considered that, though the volume of hydrogen is small because the absolute volume of water in the supplied mixture gas (the saturated vapor pressure at 80 °C: 350 mmHg at the room pressure) is small in the other experiment(s), the generation volume however is improved greatly and significantly by adding water to supersaturation. Namely, it can be considered that hydrogen is generated due to the decomposition of the water among layers of stratified clay minerals contained in zeolite, or of the water maintained in fine holes thereof, and further of the water molecule residing in the silica-alumina locally.

From this, it can be inferred that the collecting rate or yield rate of hydrogen is further higher than that obtained by conducting the reaction under high pressure and in an atmosphere of supersaturated vapor pressure.

The measurement of the presence of CH₄ in the experiment mentioned above is due to the possibility that the H₂ detected may be generated by the reaction below with released carbon (C) contained in zeolite, but not generated through the catalytic function of zeolite.

C+2H₂O=CO₂+2H₂

CO₂+4H₂=CH₄+2H₂O

The fact that CH₄ is detected means that the above-mentioned reaction is possibility occurring. In response to this observation, a test under the condition detailed below was repeated twenty (20) times.

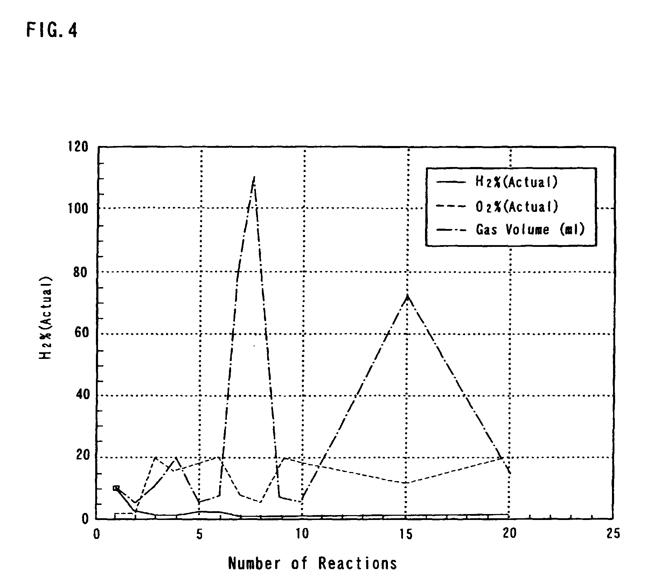

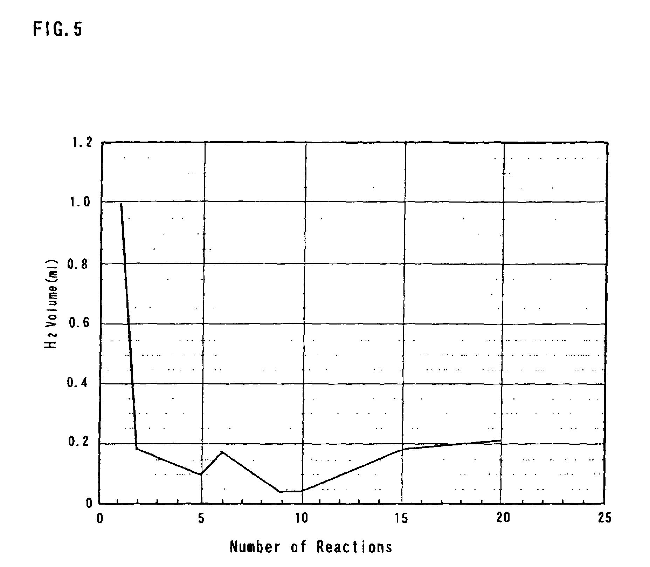

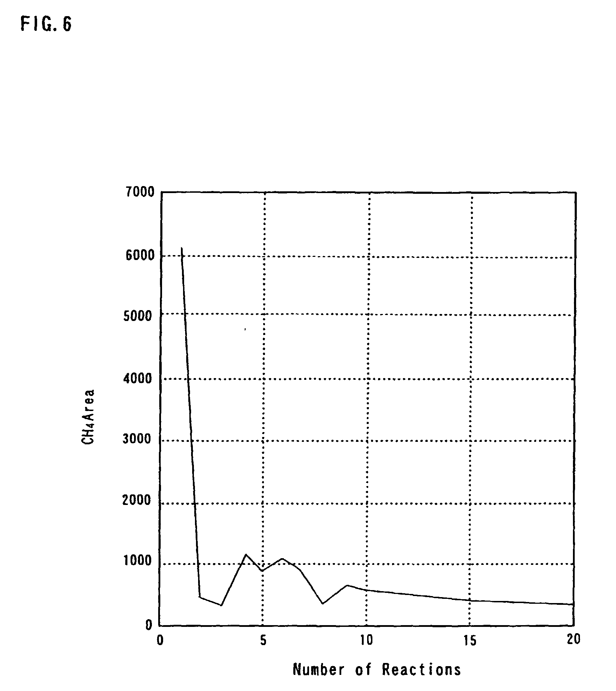

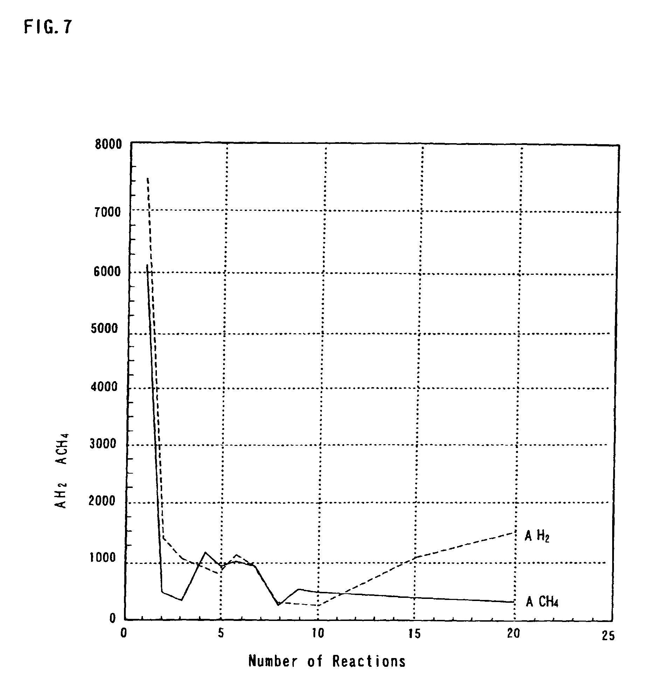

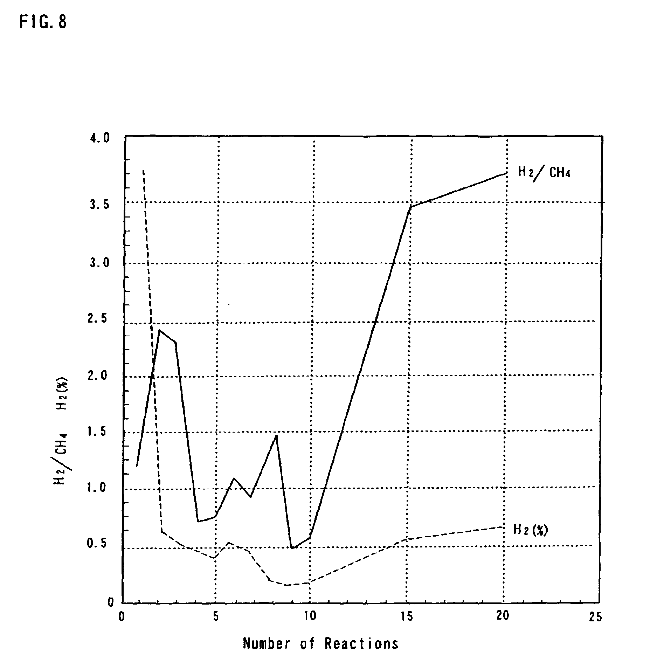

Namely, a sample of 175g is filled in a reactor tube (inner volume: about 1 liter) and the temperature thereof is raised to 500°C. Thereafter, steam or water vapor at 100°C is introduced from a lower portion of the reactor tube, and after holding this condition for two (2) hours (with reaction pressure at about 1.5 atmospheres), the reacted gas is collected into a sampling bottle, to be analyzed by gas chromatography. The result of this test is shown in Figs. 4 to 8.

Paying attention to the volume of the generated hydrogen, it is seen to reduce gradually until the 10^{th} time, however it rises at the 11^{th} time and thereafter. On the other hand, the volume of CH₄ is reduced after the 2^{nd} time and shows a value becoming roughly constant after the 10^{th} time.

Assuming that H₂ production is caused by the released carbon (C) in the zeolite, this should show a value being about constant after the 11^{th} time, as the CH₄ does. However, the fact that it does not show the constant value but rather that it rises means that H₂ can be generated by means of a factor other than the released carbon C, namely by the catalytic function of the zeolite.

### INDUSTRIAL APPLICATION

The method for generating hydrogen gas and the apparatus therefor, according to the present invention, can be applied to production of hydrogen for use as fuel in a fuel cell and for the production of ethanol, etc.

## Claims

1. A method for generating hydrogen gas through direct thermal decomposition of water, wherein hydrogen is separated from water vapor molecules or water molecules by contacting the water vapor or water with a compound oxide being of a silica-alumina group at a temperature being equal to or greater than 300°C and equal to or less than 600°C.

2. A method for generating hydrogen gas through direct thermal decomposition of water, as defined in Claim 1, wherein said compound oxide being of the silica-alumina group is zeolite.

3. A method for generating hydrogen gas through direct thermal decomposition of water, as defined in Claim 1 or 2, wherein the reaction separating said hydrogen is conducted under pressure and in an atmosphere of supersaturated water vapor.

4. An apparatus for generating hydrogen gas through direct thermal decomposition of water, comprising:
a steam generating means for generating water vapor from water;
a reactor containing a compound oxide being of a silica-alumina group therein;
a steam supplying means for sending the water vapor generated by said steam generating means into said reactor; and
a gas removal means for drawing out hydrogen gas generated in said reactor to an outside thereof.

5. An apparatus for generating hydrogen gas through direct thermal decomposition of water, comprising:
a reactor containing a compound oxide of silica-alumina group therein;
a water supply means for sending water into said reactor; and
a gas removal means for drawing out hydrogen gas generated in said reactor to an outside thereof.

6. An apparatus for generating hydrogen gas through direct thermal decomposition of water, as defined in Claim 4 or 5, wherein said compound oxide being of a silica-alumina group is zeolite.

7. An apparatus for generating hydrogen gas through direct thermal decomposition of water, as defined in any one of Claims 4 to 6, wherein said reactor is of a vertical type, said steam supplying means is connected to a lower portion of said vertical type reactor, and said gas removal means is connected to an upper portion of said vertical type reactor.

8. An apparatus for generating hydrogen gas through direct thermal decomposition of water, as defined in any one of Claims 4 to 6, wherein said reactor is of a horizontal type, said steam supplying means is a pipe inserted into said horizontal type reactor from one side thereof, and said gas removal means is connected to an other side of said horizontal type reactor.

9. An apparatus for generating hydrogen gas through direct thermal decomposition of water, as defined in any one of Claims 4 to 7, further comprising a stirring means for stirring the compound oxide of silica-alumina group.

10. An apparatus for generating hydrogen gas through direct thermal decomposition of water, as defined in Claim 9, wherein said stirring means is constructed with a stirring vane in said vertical type reactor, while said stirring means is constructed with a rotation mechanism for rotating said reactor around a horizontal axis in said horizontal type reactor.

11. An apparatus for generating hydrogen gas through direct thermal decomposition of water, as defined in any one of Claims 4 to 10, wherein an electric field is formed in the inside of said reactor.
